(19) Europäisches Patentamt
European Patent Office
Office européen des brevets

(11) **EP 2 524 502 B1**

(12) **EUROPEAN PATENT SPECIFICATION**

(45) Date of publication and mention
of the grant of the patent:
**23.11.2016 Bulletin 2016/47**

(51) Int Cl.:
***H04N 7/24*** (2006.01)

(21) Application number: **11704082.4**

(22) Date of filing: **12.01.2011**

(86) International application number:
**PCT/GB2011/000037**

(87) International publication number:
**WO 2011/086350 (21.07.2011 Gazette 2011/29)**

(54) **METHOD AND APPARATUS FOR PROCESSING TRANSPORT STREAMS**

VERFAHREN UND VORRICHTUNG ZUR VERARBEITUNG VON TRANSPORTSTRÖMEN

PROCÉDÉ ET APPAREIL DE TRAITEMENT DE FLUX DE TRANSPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2010 GB 201000566**

(43) Date of publication of application:
**21.11.2012 Bulletin 2012/47**

(73) Proprietor: **British Broadcasting Corporation London W1A 1AA (GB)**

(72) Inventors:
• **PERROTT, Stephen, David**
**London W12 7SB (GB)**
• **POOLE, Christopher, Edward**
**London W12 7SB (GB)**
• **HUNTER, Jeffrey, Robert**
**London W12 7SB (GB)**

(74) Representative: **Loveless, Ian Mark**
**Reddie & Grose LLP**
**16 Theobalds Road**
**London WC1X 8PL (GB)**

(56) References cited:
**US-A1- 2009 150 557     US-A1- 2009 328 124**

• **DVB ORGANIZATION: "mg161.doc", DVB, DIGITAL VIDEO BROADCASTING, C/O EBU - 17A ANCIENNE ROUTE - CH-1218 GRAND SACONNEX, GENEVA - SWITZERLAND, 16 October 2009 (2009-10-16), XP017820653,**

**Description**

BACKGROUND OF THE INVENTION

The present invention relates to methods and apparatus for audio and/ or video delivery over a network.

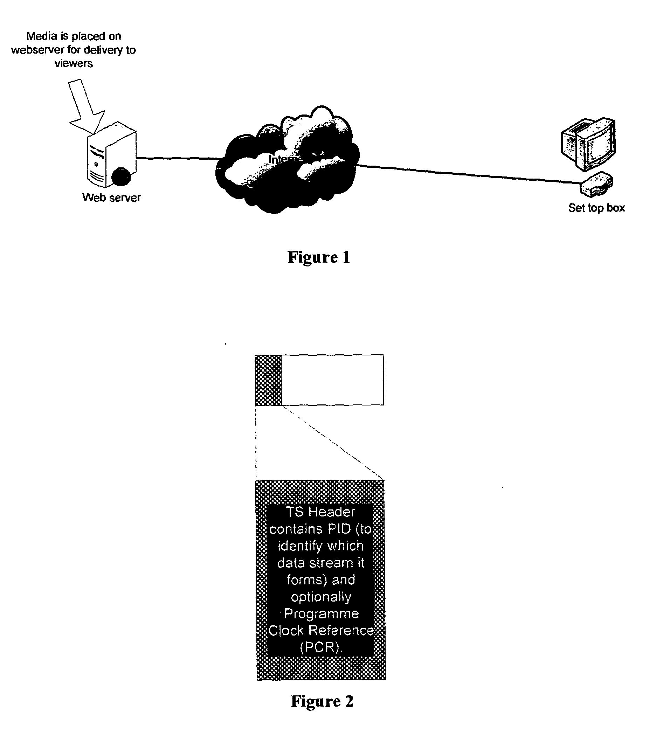

When delivering audio and video media over unmanaged internet connections variable network performance can be encountered. There is a trade off between sound and picture quality, which requires the highest bitrate possible, and reliable performance, which needs the bitrate of the media to be lower than the capacity of the connection between the client and the media server. This is problematic because the capacity can vary with other usage, both near the ends of the connection (eg at the servers, or in a home), and across the networks it is carried on. The variation can mean that a bitrate low enough to work reliably for the duration of a one hour programme may be substantially lower than the average capacity during that hour. One way to cope with this variation is by using an adaptive bitrate system, in which the bitrate of the media stream being delivered can be regularly altered according to the available capacity. A schematic diagram of a delivery system is shown in Figure 1.

Modern compression techniques tend to encode media in segments in order to take advantage of time domain transforms and similarities between frames. For audio streams these segments are usually less than 1/10 second. However for video, the prediction between frames can continue for several seconds. During these segments it is not generally possible to start decoding - instead the media player must wait for the next one to start.

Traditional adaptive bitrate systems require the media to be specially encoded in a format containing chunks of data which are self contained. However it is desirable to create self contained streams of data, each being an encoding of a programme at a specific bitrate, with the client being able to switch between these as necessary.

A stream format typically used by broadcasters, both for broadcasting and for internet delivery of media, is the MPEG2 Transport Stream (ISO/IEC13818-1). This is a container which allows the combination of audio, video and subtitles in a manner which is easy for the client to decode when streamed. A Transport Stream consists of a series of fixed size packets. Each of these Transport Stream (TS) packets belong to one of the components (such as audio or video) of the stream. A header indicates which stream it belongs to and may be followed by an adaptation field optionally carrying a clock (the Programme Clock Reference - PCR). Figure 2 shows the structure of a Transport Stream packet.

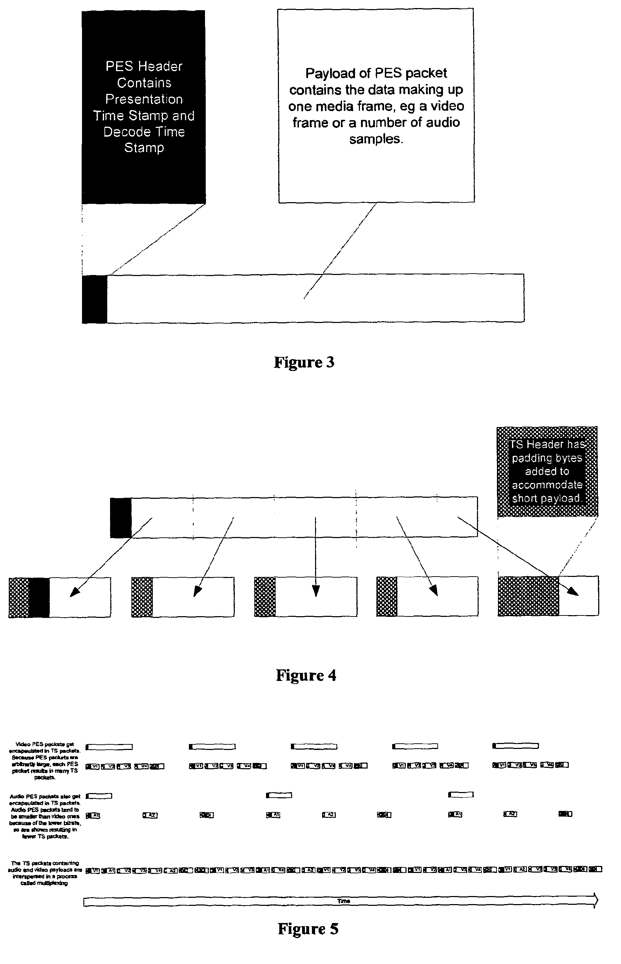

When creating a transport stream the source media (audio or video) is encoded and packaged into PES packets. These PES packets each contain a frame of media, in the case of video one frame, or for audio a number of samples. Each PES packet has a timestamp which indicates to the client the time at which it is to be presented to the viewer. The structure of a PES packet is shown in Figure 3.

These PES packets are split up into smaller pieces and placed within the payload of TS packets, as shown in Figure 4. The start of a PES packet always gets a new TS packet. To accommodate this the TS packet containing the end of a PES packet has padding bytes added to the header as necessary.

Finally the TS packets from the different streams (audio and video) are multiplexed together - creating one stream with all the packets in, with the timing between the streams aligned so that players do not have to buffer too much information. This is illustrated in Figure 5.

Document DVB-MG 161, 'Measuring PCRs around a discontinuity' of the CCETT contribution to DVB MG meeting of 24-25th June 1999, relates to the splicing of TV programs in terrestrial broadcasting and the discontinuities and associated problems that inevitably arise in an MPEG2 environment.

SUMMARY OF THE INVENTION

We have appreciated the need for improved method of switching between streams, in particular transport streams used for two or more components, such as audio components and video components.

We have appreciated, in particular, the need to provide an improved process by which a client device may switch between different transport streams presenting the same video data without introducing problems related to non-video data packets provided in the same streams.

In an embodiment of a first aspect of the invention, a processing method involves ensuring that switch points are allocated at the same positions in each of two or more transport streams, wherein the transport streams are encodings of the same source media and each transport stream comprises transport stream packets from two or more components comprising audio and video components, and the switch points are identified based on suitably marked transport stream packets. The transport stream packets of data are then rearranged within each of the streams such that non-video transport stream packets relating to given data items are grouped together and not split either side of switch points. The rearrangement of non-video transport stream packets in relation to the video transport stream packets comprises moving the non-video transport stream packets in relation to the video transport stream packets and arranging the switch points accordingly. This aspect of the invention ensures that, when changing between streams at the switch points, no presentation difficulties are caused in relation to the non-video data. Preferably, the non-video data is audio data and the packets relating to a given item are transport stream packets relating to a given frame of media, or PES packet.

It is noted that the way in which transport stream packets are grouped together need not be based on an identifier within each of the transport stream packets, rather in the case of PES packets, the grouping may be by the existence of a payload start indicator in one of the transport stream packets showing the start of one PES packet (and therefore the end of the previous).

An embodiment of the first aspect also re-arranges the non-video transport stream packets so that they are aligned in each of the streams in addition to ensuring that they are not split either side of the switch points.

In an embodiment of a second aspect of the invention a method of processing relates to a clock reference within the transport stream packets in each of the transport streams. We have appreciated the need to ensure that, when switching between transport streams, such a clock reference within the transport stream packets does not jump, but progresses monotonically. This aspect of the invention involves processing the reference clock values in each of the transport streams such that, immediately after switch points, the clock values in each of the streams are the same and then arranging the clock values in each of the streams to progress monotonically between the switch points.

The various aspects of the invention may also be embodied in an apparatus for processing transport streams. The invention is defined in the claims to which reference is now directed.

BRIEF DESCRIPTION OF THE DRAWINGS

The invention will now be described in more detail by way of example with reference to the drawings, in which:

**Figure 1** is a schematic diagram showing delivery of audio and/ or video content over the Internet;
**Figure 2** shows the structure of a transport stream TS packet;
**Figure 3** shows the structure of a PES packet;
**Figure 4** shows how PES packets are encapsulated within TS packets;
**Figure 5** shows how audio and video packets are multiplexed together;
**Figure 6** shows IDR points across multiple streams;
**Figure 7** shows how audio PES packets may be broken when they span a switch point;
**Figure 8** shows how PES packets with a given time stamp may be on different sides of a switch point in two respective streams;
**Figure 9** shows how a program reference clock may differ in timing between two streams;
**Figure 10** shows a flow diagram of a method embodying the invention;
**Figure 11** shows a step of analysing switch points in a method embodying the invention;
**Figure 12** is a schematic view of moving packets ahead of a switch point in a method embodying the invention;
**Figure 13** is a schematic view of moving switch points in a method embodying the invention;
**Figure 14** shows a step of evenly distributing audio packets in a method embodying the invention;
**Figure 15** shows a step of aligning PCR values in a method embodying the invention; and
**Figure 16** shows an apparatus embodying the invention.

DETAILED DESCRIPTION OF THE PREFERRED EMBODIMENTS

A method embodying the invention comprises processing two or more transport streams so as to avoid some of the problems previously noted. The invention may also be embodied in an apparatus for processing transport streams.

In IP delivery systems, providing audio-video data to set-top boxes or other user devices across the Internet, it is often necessary to provide data relating to the same content (television programme) at different bit rates to allow the capabilities of different systems. A client side device can then determine which of the available streams to request depending upon capability of the client or restriction of bandwidth of the network.

Video coding schemes typically perform compression by algorithms operating between video frames. It is not sensible, therefore, to attempt to switch between streams of video data at arbitrary points. Accordingly, specific frames that are not based on previous frames are inserted at various points in transport streams-these frames are known as I-frames. It is therefore possible to switch between different streams of data representing the same television programme at I-frames if these I-frames are at the same positions in each of the different transport streams.

However, the component comprising audio data is typically interspersed with the video data component in each stream on a packet by packet basis. It may not be appropriate, therefore, to switch between transport streams at a given I-frame from the point of view of continuity of the audio data. At the receiver side, the handling of data within a mixed audio-video transport stream is by buffering at the receiver and presentation and according to time stamps. At a given position within the stream, the audio packets related to the corresponding video may not have been received.

To allow a client media player to switch between the streams, there needs to be a point in the media stream which is currently being played at which the client can leave the stream without losing data, and this must coincide in time with a point in the new stream where the client can pick up the stream.

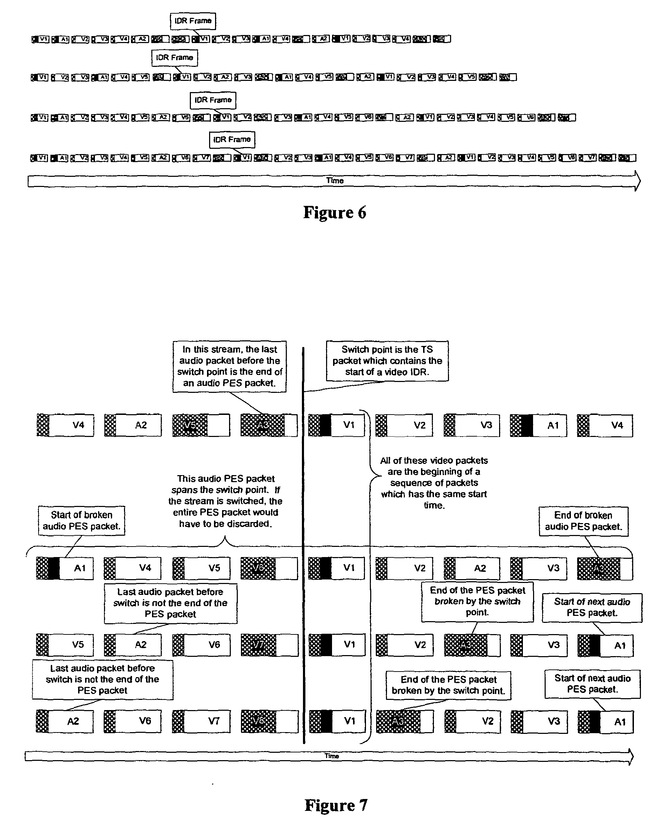

These points are introduced in the video during encoding through the use of I (Intra)-Frames, and specifically in MPEG4-AVC (ISO/IEC 12296-10) / ITU-H.264 coded media the use of IDR (Instantaneous Decoder Reset) points across all bitrates at the same time - shown in Figure 6. These points become switch points - places where the player can switch between streams. For simplicity, the data in a given stream between two switch points is referred to here as a chunk.

We have appreciated, though, that when audio data is multiplexed with the video, two problems may occur: broken packets and poor audio alignment between the streams. Audio data from one audio PES packet may cross a switch point. If a switch then occurs at this point that PES packet will be lost - resulting in audible disruption.

Figure 7 shows four transport streams. A suitable switch point has been found-indicated by the vertical black line. In each stream the next packet is the start of an IDR, with the same timestamp in all streams. In the first stream the audio packets are not broken by the switch point - the last audio TS packet before the switch point is the end of a PES packet and the first one after is the start of the next PES packet. In the other three streams the switch point is between audio TS packets which make up a PES packet. Any switching involving one of these streams would cause a problem as the PES packet would be corrupted. This could result in either the whole packet being lost if the corruption was detected, or an audible artefact if it was not detected by the receiver.

We have further appreciated a problem that audio PES packets with a given timestamp may not be between the same switch points across all of the different bitrate streams. This can result in a client either having two sets of data for a given timestamp when it switches, or having no data for a timestamp when it switches. Either of these can cause an audible artefact during playback.

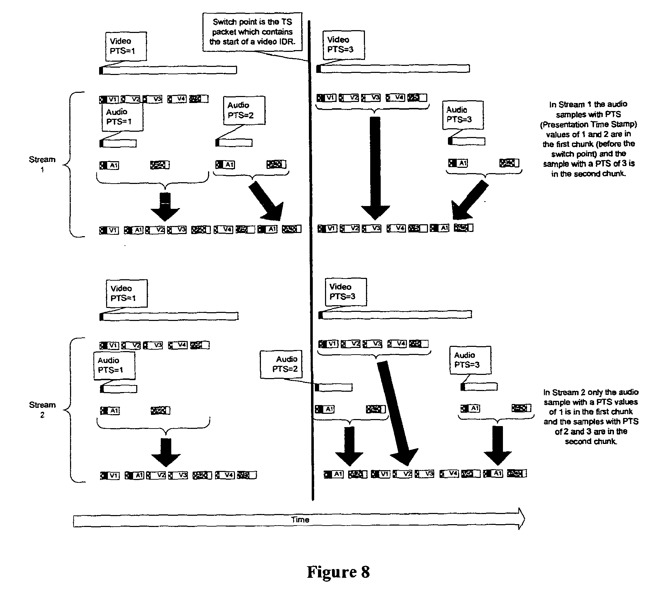

Figure 8 shows how the audio PES packet with a given timestamp can end up on different sides of a switch point in two streams. Note that the PTS values are in arbitrary units rather than exactly representing a real stream. In the first stream the audio packet with a PTS of 2 is in the first chunk, but in the second stream it is in the second chunk. Playing both chunks from the same stream does not cause a problem, however switching will lead to a problem. If the player switches from the first stream to the second it will experience two audio packets with a PTS of 2. On the other hand if it switches from the second stream to the first stream it will not have any audio packet with a PTS of 2. This will lead to an audible noise as there will be a gap in the audio data coming out of the decoder.

We have further appreciated that in addition to the problems caused by the multiplexing of audio and video together, there can also be interruptions to the programme clock when streams are switched. Transport Streams contain a clock reference, the "Programme Clock Reference, or PCR". This is carried as an optional field in the headers of TS packets, and is used by the receiver to generate the clock it uses to decide when to present the media to the viewer. As a result of differences in the size of the video packets between streams, this clock reference is not always exactly the same at the switch points. This difference is not generally a problem. However in certain situations it can cause the clock to go backwards.

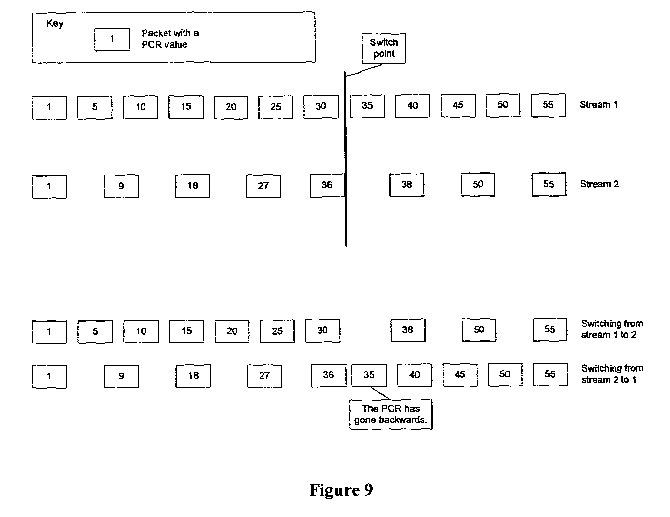

Figure 9 shows some example PCR values present in two streams at the top of the diagram. At the bottom are the sequence of PCR values which the receiver would obtain if it switched between the streams at the switch point. When switching from stream 1 to stream 2 there is no problem - the PCR increases in value throughout. When switching from stream 2 to stream 1 the PCR goes from 27 to 36 to 35 to 40. The 36 to 35 transition means that the clock has gone backwards. On some hardware decoders this can cause playback to stall momentarily, which is noticeable to the viewer. Even with the discontinuity flag set in the transport stream header the playback stall will occur on some decoders.

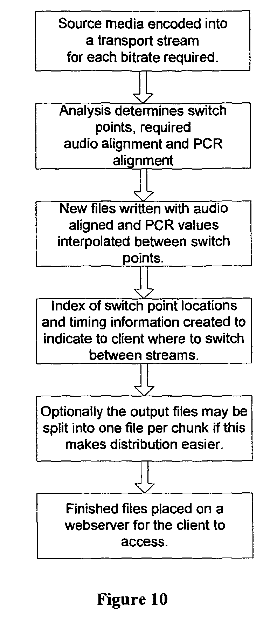

The broad processing steps will first be described before describing a specific implementation of the embodying method. In broad terms, the embodiment creates a set of transport streams, each with a different bit rate using commodity media encoding systems. Then, by using a post processing approach, these are adapted for use in an adaptive bit rate system. The process steps are shown in figure 10.

As shown in figure 10, a source media is first encoded into two or more different transport streams at each bit rate required. For example, a television programme may be encoded at two different bit rates, a high rate and a low rate, so that a client device may switch to the lower bit rate if necessary.

At the next step, a process is carried out to analyse and determine appropriate switch points within the two or more transport streams. The switch points are aligned and audio packets rearranged within each of the streams to ensure that audio packets relating to a given of PES packet are correctly positioned between switch points. In this way, when switching from one stream to another, the client device is guaranteed to receive one complete PES packet before any given a switch point. In addition, timing reference values in the packets in each stream are written so as to ensure that, when switching from one stream to another, the clock reference values always progress and do not jump forwards or backwards. Details of this step are explained in further detail below.

Once the transport streams have been analysed and altered according to the previous step, new files are written in which the audio packets are now aligned appropriately in relation to the video packets and the reference clock (PCR) values are appropriately set using an interpolation function between switch points.

The movement of the packets and the setting of the clock reference values are performed in a manner such that when the streams are played, the player's buffers do not overflow or underflow.

At a subsequent step, an index of the switch point locations is created along with timing information to indicate to the client device where it is possible to switch between the streams. The output files may optionally be split into one file for each chunk and any of the files may be placed on a web server ready for a client device to access.

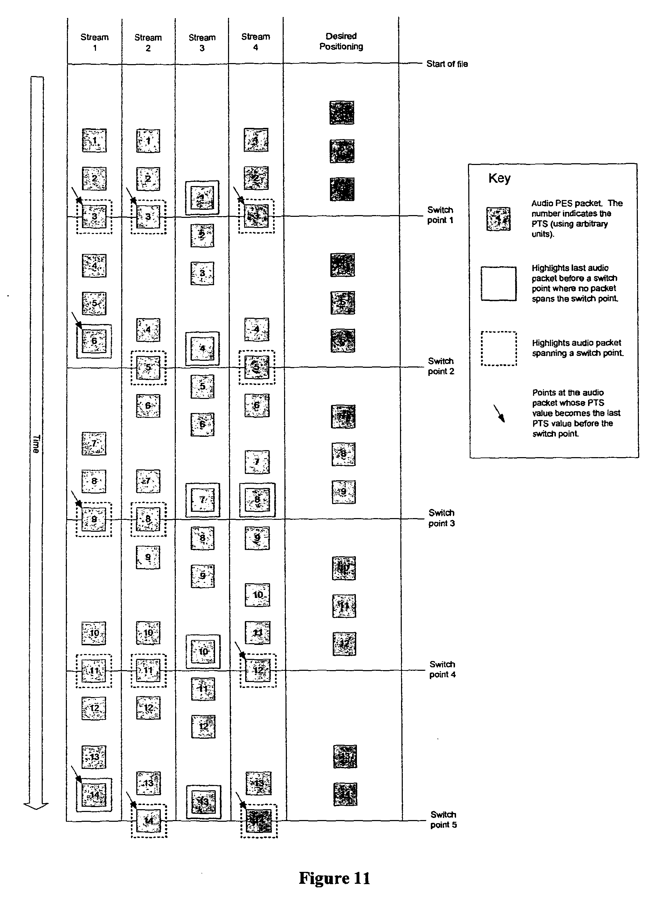

The method step of analysing and altering transport streams in accordance with an embodiment of the invention will now be described in greater detail with reference to figures 11 to 15.

The method first locates switch points in each stream based on suitably marked packets in the video stream. The marking of the video packets may be, for example, the use of I-frames as previously described.

The method then compares the switch points from all streams to identify co-timed switch points present in all streams. As shown in figure 11, five switch points have been identified that are common to all 4 transport streams shown.

The method then checks, in each stream, whether an audio PES packet is split by the switch point, and if so records the PTS of that packet. If not it records the last audio PTS before the switch point. For each switch point the highest audio PTS across all the streams is chosen. Figure 11 illustrates this. Each column represents a stream, with time increasing down the page. The PTS indicated by the arrows at each switch point is the one chosen. The right hand column shows the intended packet alignment in the finished streams. So, we can see that at switch point 1, the highest presentation time stamp of any of the audio PES packets either just prior to the switch point or crossing the switch point is PES packet number three. At switch point 2, PES packet number five crosses the switch point in streams two and four but PES packet number six is just prior to that switch point in stream one and so is chosen as the presentation timestamp value of all packets that should be placed prior to switch point 2.

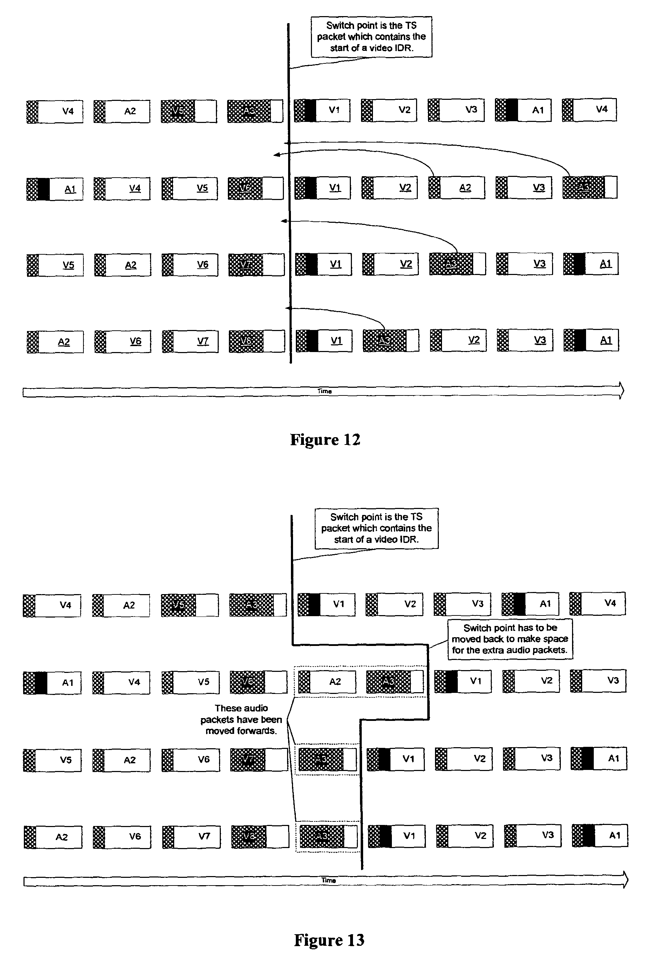

As shown in figure 12, at each switch point all audio PES packets with PTS values up until the highest selected in the previous stage are moved just ahead of the switch point. The movement of the audio PES packets is by rearranging the packet order in relation to the video packets in each stream.

As a result of this move the stored switch points (either as a packet index or byte offset from the start of the file) are updated to correct for the packet movements, shown in Figure 13. The switch points are typically not stored within each of the streams, instead the position of the switch points may be stored in a separate manifest and so the step of updating the switch points may be by updating the positions stored in this separate manifest data.

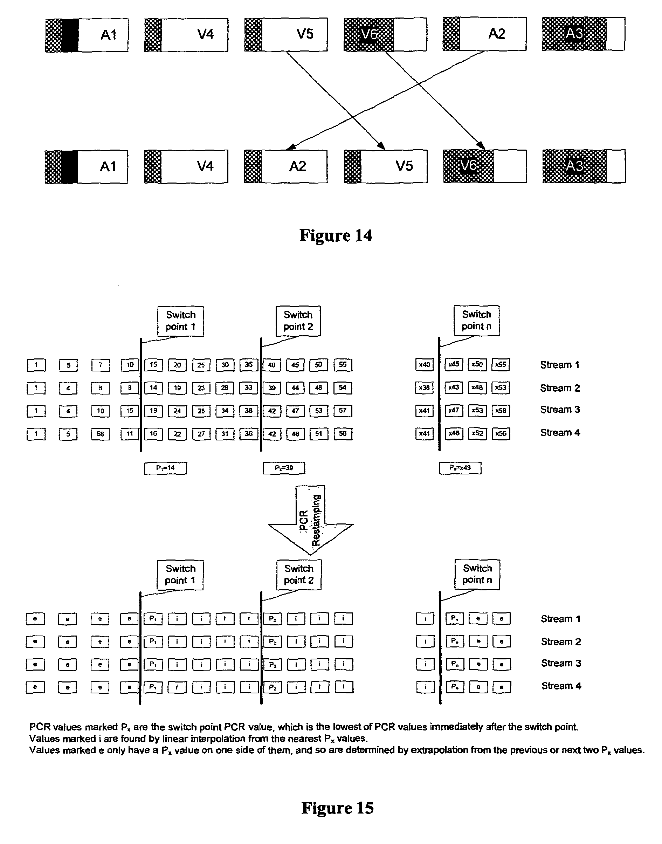

Audio packets towards the end of each chunk are then evenly distributed, as shown in Figure 14, by moving them earlier as necessary (and other packets later) to prevent an excessive instantaneous audio bitrate. In the Transport Stream system target decoder specified in section 2.4.2 of ISO/IEC 13818-1 (a standard model for a receiver) there is a 512 byte Transport Buffer for audio elementary streams, with an output bitrate fixed at 2Mbit/s. This buffer can overflow if audio TS packets arrive close together and the transport stream bitrate exceeds 2Mbit/s.

The PCR value immediately after each switch point is then aligned across all streams, as shown in figure 15. This is done by taking the next PCR value after the switch point from each stream and comparing them. The lowest value is used and is written into every stream. Using the lowest value ensures that the clock is only advanced and never retarded, thus ensuring that decoder buffers do not underflow. Once this has been done for all the switch points, all the other PCR values in the streams are re-written using linear interpolation or extrapolation.

The other values are calculated as

$$PCR_n = \begin{cases} \frac{n(PCR_{NextSP} - PCR_{PrevSP})}{NextSP - PrevSP} + PCR_{PrevSP} & \text{for } FirstSP < n < LastSP \\ \frac{n(PCR_{PrevSP} - PCR_{Prev2SP})}{PrevSP - Prev2SP} + PCR_{PrevSP} & \text{for } n > LastSP \\ PCR_{NextSP} - \frac{n(PCR_{Next2SP} - PCR_{NextSP})}{Next2SP - NextSP} & \text{for } n < FirstSP \end{cases}$$

(Equation 1)

Where:

n = number of packet the PCR is being carried on
PCRx = PCR value on packet number x.
NextSP = the first packet after the next switch point with a PCR value.
Next2SP = the first packet after the next but one switch point with a PCR value.
PrevSP = the first packet after the previous switch point with a PCR value.
Prev2SP = the first packet after the previous but one switch point with a PCR value.

Finally, the resulting versions of the transport streams are stored, ready for distribution, together with a set of information about the location of the switch points - both the playback time they occur at and the byte offset within the transport stream they can be found at.

The embodiment has been described so far in terms of audio data accompanying video data in each stream. In addition to analysing and repositioning audio packets, the same approach could be taken to subtitles, or other data were timing as between different streams is of importance. Optionally the finished streams can be split into multiple files or left as one file per bitrate with an index indicating the location of the switch points as a byte offset.

A preferred implementation of the embodiment of the invention will now be described. The solution has been implemented using a two pass approach.

In the first pass the position of audio packets, potential video switch points and PCR values are recorded for each stream. Potential switch points are recognised using the Random Access Point markers in the video stream.

An analysis phase identifies co-timed potential switch points present in all streams and generates a list of switch points. At each switch point the last audio PTS which must be before the switch point for each stream is recorded as either the PTS of an audio PES packet which crosses the switch point if one does cross the switch point, or the last audio PES packet before the switch point otherwise. The highest audio PTS value across all the streams for the switch point is then recorded for each switch point. The PCR value immediately after the switch point is recorded for all streams. These are then compared and the lowest one selected as the PCR value for that switch point.

The source transport streams are then processed a second time. At each switch point any audio TS packets after the switch point, which relate to PTS values up to and including the highest audio PTS for the switch point is moved before the switch point. Audio packets which are close to the switch point are distributed over the 50 packets leading up to the switch point to avoid high instantaneous audio bitrates. PCR values are either set to the switch point PCR value if they are the first PCR value after the switch point, or determined as described earlier if they are not. The aligned transport streams are written to new files which are then used for distribution of the media. The switch point information is written out as a manifest file which can be used by the client to work out how to request media.

An option is available to allow the processed transport streams to be split into different files at the switch points, for use in adaptive systems where chunks are requested as separate files instead of by byte range from a larger file.

An advantage of the embodiments of the invention is that it allows an entire programme to be encoded using standard encoders at different bitrates and then post processed to create a set of files which can be used for adaptive bitrate delivery.

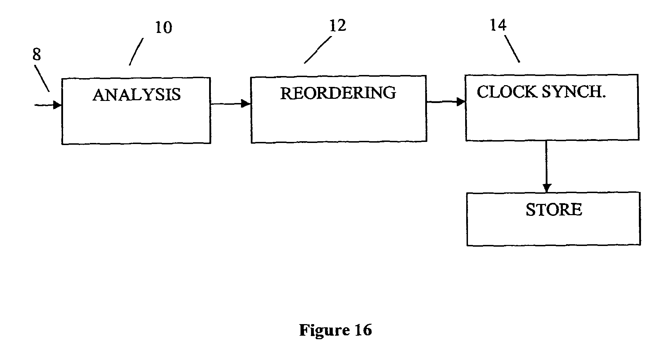

The invention may also be embodied in apparatus as shown in figure 16. An analysis unit 10 receives each of the transport streams at an input 8 and is configured to perform the function of analysing switch point locations and whether PES packets are split across those switch point locations as described above. A re-ordering unit comprises a memory arrangement to act as a buffer by which the audio packets may be rearranged in relation to the video packets within each stream. A clock sync unit 14 then writes the appropriate PCR values into each of the streams using the functions described above. Lastly, a store 16 is arranged to receive the multiple transport streams and to act as a web server to provide these to client devices on demand.

Although the embodiments have been described with reference to audio and video transport streams, it should be noted that the techniques described may be applied to other data that is transmitted in two or more transport streams. For the avoidance of doubt, the streams may comprise more than two components, for example audio, video, text, subtitles and so on.

**Claims**

1. A method of processing two or more transport streams, each transport stream comprising transport stream packets from two or more components wherein the transport streams are encodings of the same source media, the two or more components comprising audio and video components, the components comprising frames of media split into transport stream packets, comprising:

      - locating switch points at the same positions in each of the transport streams based on suitably marked transport stream packets from a first one of the two or more components of each transport stream;
      - checking in each transport stream whether transport stream packets from a second one of the two or more components whose payloads form a frame of media are located between two adjacent switch points; and
      - arranging transport stream packets in each of the transport streams such that transport stream packets of the second one of the two or more components whose payloads together form a frame of media within each transport stream are located between two adjacent switch points in each of the transport streams.

2. A method according to claim 1, wherein the first component comprises video data, the second component comprises audio data and optionally the step of locating switch points is based on suitably marked transport stream packets from the video components wherein the marking is the use of an I-frame.

3. A method according to claims 1 or 2, wherein each frame of media is contained in a PES packet.

4. A method according to claims 1, 2 or 3, the frames of media in the second component having a presentation timestamp and the step of arranging transport stream packets in each of the transport streams comprises arranging transport stream packets which carry frames of media with the same presentation timestamp such that they are between the same two adjacent switch points in each transport stream.

5. A method according to claim 4, wherein the step of arranging comprises moving transport stream packets such that for each component all transport stream packets with presentation timestamp values up to the highest presentation timestamp of any transport stream at a given switch point are moved ahead of the given switch point.

6. A method according to any preceding claim, wherein transport stream packets of each second component near a switch point are rearranged so as to be dispersed amongst all transport stream packets.

7. A method according to any preceding claim, the transport stream packets having a clock reference value and the method further comprising comparing the clock reference value of the transport streams immediately after each switch point and writing a common clock reference into the transport stream packets of the transport streams at that point.

8. A method of processing two or more transport streams, wherein the transport streams are encodings of the same source media, the two or more components comprising audio and video components, each transport stream comprising transport stream packets, the transport stream packets having a clock reference value, comprising:

   - locating switch points at the same positions in each of the transport streams based on suitably marked transport stream packets in each transport stream;
   - comparing the clock reference value of the transport streams immediately after each switch point; and
   - writing a common clock reference value into the transport stream packets of the transport streams immediately after each switch point.

9. A method according to claim 7 or 8, wherein the common clock reference value is the lowest clock reference value of any transport stream at that point.

10. A method according to claim 7, 8 or 9, further comprising writing clock reference values into the transport stream packets of the transport streams such that the clock reference increases monotonically between switch points.

11. A method according to claim 10, wherein the clock reference in each transport stream is written according to an interpolation function.

12. A method according to any preceding claim where the transport streams contain audio and video components and the transport streams are encodings of the same source media.

13. A method according to claim 12 where each transport stream is encoded at a different bitrate, and optionally the streams are designed to be used in an adaptive bitrate delivery system.

14. Apparatus for processing two or more transport streams, each transport stream comprising transport stream packets from two or more components, wherein the transport streams are encodings of the same source media, the two or more components comprising audio and video components, the components comprising frames of media split into transport stream packets, comprising:

   - means (10) for locating switch points at the same positions in each of the transport streams based on suitably marked transport stream packets from a first one of the two or more components of each transport stream;
   - means (10) for checking in each transport stream whether transport stream packets from a second one of the two or more components whose payloads form a frame of media are located between two adjacent switch points; and
   - means (12) for arranging transport stream packets in each of the transport streams such that transport stream packets of the second one of the two or more components whose payloads together form a frame of media within each stream are located between two adjacent switch points in each of the transport streams.

15. Apparatus for processing two or more transport streams, wherein the transport streams are encodings of the same source media, the two or more components comprising audio and video components, each transport stream comprising transport stream packets, the transport stream packets having a clock reference value, comprising:

- means (10) for locating switch points at the same positions in each of the transport streams based on suitably marked transport stream packets in each transport stream;
- means (10) for comparing the clock reference value of the transport streams immediately after each switch point; and
- means (14) for writing a common clock reference value into the transport stream packets of the transport streams immediately after each switch point.

## Patentansprüche

1. Verfahren zum Verarbeiten von zwei oder mehr Transportströmen, wobei jeder Transportstrom Transportstrompakete von zwei oder mehr Komponenten umfasst, wobei die Transportströme Encodierungen derselben Quellmedien sind, wobei die zwei oder mehr Komponenten Audio- und Video-Komponenten umfassen, wobei die Komponenten Medien-Frames umfassen, die in Transportstrompakete unterteilt sind, das Folgendes beinhaltet:

- Suchen von Schaltpunkten an denselben Positionen in jedem der Transportströme auf der Basis von geeignet markierten Transportstrompaketen von einer ersten der zwei oder mehr Komponenten jedes Transportstroms;
- Prüfen in jedem Transportstrom, ob sich zwischen zwei benachbarten Schaltpunkten Transportstrompakete von einer zweiten der zwei oder mehr Komponenten befinden, deren Nutzlasten einen Medien-Frame bilden; und
- Anordnen von Transportstrompaketen in jedem der Transportströme, so dass sich zwischen zwei benachbarten Schaltpunkten in jedem der Transportströme Transportstrompakete der zweiten der zwei oder mehr Komponenten befinden, deren Nutzlasten zusammen einen Medien-Frame innerhalb jedes Transportstroms bilden.

2. Verfahren nach Anspruch 1, wobei die erste Komponente Videodaten umfasst, die zweite Komponente Audiodaten umfasst und der Schritt des Suchens von Schaltpunkten optional auf geeignet markierten Transportstrompaketen von den Videokomponenten basiert, wobei die Markierung die Verwendung eines I-Frame ist.

3. Verfahren nach Anspruch 1 oder 2, wobei jeder Medien-Frame in einem PES-Paket enthalten ist.

4. Verfahren nach Anspruch 1, 2 oder 3, wobei die Medien-Frames in der zweiten Komponente einen Präsentationszeitstempel haben und der Schritt des Anordnens von Transportstrompaketen in jedem der Transportströme das Anordnen von Transportstrompaketen beinhaltet, die Medien-Frames mit demselben Präsentationszeitstempel tragen, so dass sie sich zwischen denselben zwei benachbarten Schaltpunkten in jedem Transportstrom befinden.

5. Verfahren nach Anspruch 4, wobei der Schritt des Anordnens das Bewegen von Transportstrompaketen beinhaltet, so dass für jede Komponente alle Transportstrompakete mit Präsentationszeitstempelwerten bis zum höchsten Präsentationszeitstempel eines beliebigen Transportstroms zu einem gegebenen Schaltpunkt vor dem gegebenen Schaltpunkt bewegt werden.

6. Verfahren nach einem vorherigen Anspruch, wobei Transportstrompakete jeder zweiten Komponente in der Nähe eines Schaltpunkts umgeordnet werden, so dass sie unter allen Transportstrompaketen verteilt sind.

7. Verfahren nach einem vorherigen Anspruch, wobei die Transportstrompakete einen Taktreferenzwert haben und das Verfahren ferner das Vergleichen des Taktreferenzwerts mit den Transportströmen unmittelbar nach jedem Schaltpunkt und das Schreiben einer gemeinsamen Taktreferenz in die Transportstrompakete der Transportströme an diesem Punkt beinhaltet.

8. Verfahren zum Verarbeiten von zwei oder mehr Transportströmen, wobei die Transportströme Encodierungen derselben Quellmedien sind, wobei die zwei oder mehr Komponenten Audio- und Video-Komponenten umfassen, wobei jeder Transportstrom Transportstrompakete umfasst, wobei die Transportstrompakete einen Taktreferenzwert haben, das Folgendes beinhaltet:

- Suchen von Schaltpunkten an denselben Positionen in jedem der Transportströme auf der Basis von geeignet markierten Transportstrompaketen in jedem Transportstrom;
- Vergleichen des Taktreferenzwerts der Transportströme unmittelbar nach jedem Schaltpunkt; und
- Schreiben eines gemeinsamen Taktreferenzwertes in die Transportstrompakete der Transportströme unmittelbar nach jedem Schaltpunkt.

9. Verfahren nach Anspruch 7 oder 8, wobei der gemeinsame Taktreferenzwert der niedrigste Taktreferenzwert von allen Transportströmen an diesem Punkt ist.

10. Verfahren nach Anspruch 7, 8 oder 9, das ferner das Schreiben von Taktreferenzwerten in die Transportstrompakete der Transportströme beinhaltet, so dass die Taktreferenz monoton zwischen Schaltpunkten zunimmt.

11. Verfahren nach Anspruch 10, wobei die Taktreferenz in jedem Transportstrom gemäß einer Interpolationsfunktion geschrieben wird.

12. Verfahren nach einem vorherigen Anspruch, wobei die Transportströme Audio- und Video-Komponenten enthalten und die Transportströme Encodierungen derselben Quellmedien sind.

13. Verfahren nach Anspruch 12, wobei jeder Transportstrom mit einer anderen Bitrate encodiert wird und wobei die Ströme optional für den Gebrauch in einem adaptiven Bitratenliefersystem ausgelegt sind.

14. Vorrichtung zum Verarbeiten von zwei oder mehr Transportströmen, wobei jeder Transportstrom Transportstrompakete von zwei oder mehr Komponenten umfasst, wobei die Transportströme Encodierungen derselben Quellmedien sind, wobei die zwei oder mehr Komponenten Audio- und Videokomponenten umfassen, wobei die Komponenten Medien-Frames umfassen, die in Transportstrompakete unterteilt sind, die Folgendes umfasst:

- Mittel (10) zum Suchen von Schaltpunkten an denselben Positionen in jedem der Transportströme auf der Basis von geeignet markierten Transportstrompaketen von einer ersten der zwei oder mehr Komponenten jedes Transportstroms;
- Mittel (10) zum Prüfen in jedem Transportstrom, ob sich zwischen zwei benachbarten Schaltpunkten Transportstrompakete von einer zweiten der zwei oder mehr Komponenten befinden, deren Nutzlasten einen Medien-Frame bilden; und
- Mittel (12) Anordnen von Transportstrompaketen in jedem der Transportströme, so dass sich zwischen zwei benachbarten Schaltpunkten in jedem der Transportströme Transportstrompakete der zweiten der zwei oder mehr Komponenten befinden, deren Nutzlasten zusammen einen Medien-Frame innerhalb jedes Stroms bilden.

15. Vorrichtung zum Verarbeiten von zwei oder mehr Transportströmen, wobei die Transportströme Encodierungen derselben Quellmedien sind, wobei die zwei oder mehr Komponenten Audio- und Video-Komponenten umfassen, wobei jeder Transportstrom Transportstrompakete umfasst, wobei die Transportstrompakete einen Taktreferenzwert haben, die Folgendes umfasst:

- Mittel (10) zum Suchen von Schaltpunkten an denselben Positionen in jedem der Transportströme auf der Basis von geeignet markierten Transportstrompaketen in jedem Transportstrom;
- Mittel (10) zum Vergleichen des Taktreferenzwerts der Transportströme unmittelbar nach jedem Schaltpunkt; und
- Mittel (14) zum Schreiben eines gemeinsamen Taktreferenzwertes in die Transportstrompakete der Transportströme unmittelbar nach jedem Schaltpunkt.

**Revendications**

1. Procédé de traitement de deux ou plusieurs flux de transport, chaque flux de transport comprenant des paquets de flux de transport provenant de deux ou plusieurs composantes, les flux de transport étant des codages de mêmes données multimédia source, les deux ou plusieurs composantes comprenant des composantes audio et vidéo, les composantes comprenant des trames de données multimédia divisées en paquets de flux de transport, comprenant :

- la localisation de points de commutation aux mêmes positions dans chacun des flux de transport d'après des paquets de flux de transport convenablement repérés d'une première composante des deux ou plusieurs composantes de chaque flux de transport ;
- la vérification dans chaque flux de transport que des paquets de flux de transport d'une deuxième composante des deux ou plusieurs composantes dont les charges utiles forment une trame de données multimédia sont situés ou non entre deux points de commutation adjacents ; et
- l'agencement des paquets de flux de transport dans chacun des flux de transport de telle sorte que les paquets de flux de transport de la deuxième composante des deux ou plusieurs composantes dont les charges utiles forment ensemble une trame de données multimédia dans chaque flux de transport soient situés entre deux points de commutation adjacents dans chacun des flux de transport.

2. Procédé selon la revendication 1, dans lequel la première composante comprend des données vidéo, la deuxième composante comprend des données audio et facultativement l'étape de localisation de point de commutation repose sur des paquets de flux de transport convenablement repérés des composantes vidéo, le repérage étant l'utilisation d'une trame I.

3. Procédé selon la revendication 1 ou 2, dans lequel chaque trame de données multimédia est contenue dans un paquet PES.

4. Procédé selon les revendications 1, 2 ou 3, les trames de données multimédia dans la deuxième composante ayant une estampille temporelle de présentation et l'étape d'agencement des paquets de flux de transport dans chacun des flux de transport comprenant l'agencement des paquets de flux de transport qui acheminent des trames de données multimédia avec la même estampille temporelle de présentation de telle sorte qu'ils se trouvent entre les mêmes deux points de commutation adjacents dans chaque flux de transport.

5. Procédé selon la revendication 4, dans lequel l'étape d'agencement comprend le déplacement de paquets de flux de transport de telle sorte que pour chaque composante tous les paquets de flux de transport ayant des valeurs d'estampille temporelle de présentation jusqu'à la plus haute estampille temporelle de présentation de n'importe quel flux de transport au niveau d'un point de commutation donné soit déplacés à l'avant du point de commutation donné.

6. Procédé selon l'une quelconque des revendications précédentes, dans lequel les paquets de flux de transport de chaque deuxième composante près d'un point de commutation sont réagencés de telle sorte à être dispersés parmi tous les paquets de flux de transport.

7. Procédé selon l'une quelconque des revendications précédentes, les paquets de flux de transport ayant une valeur de référence d'horloge et le procédé comprenant en outre la comparaison de la valeur de référence d'horloge des flux de transport immédiatement après chaque point de commutation et l'écriture d'une référence d'horloge commune dans les paquets de flux de transport des flux de transport à ce point.

8. Procédé de traitement de deux ou plusieurs flux de transport, dans lequel les flux de transport sont des codages des mêmes données multimédia source, les deux ou plusieurs composantes comprenant des composantes audio et vidéo, chaque flux de transport comprenant des paquets de flux de transport, les paquets de flux de transports ayant une valeur de référence d'horloge, comprenant :

- la localisation de points de commutation aux mêmes positions dans chacun des flux de transport d'après des paquets de flux de transport convenablement repérés dans chaque flux de transport ;
- la comparaison de la valeur de référence d'horloge des flux de transport immédiatement après chaque point de commutation ; et
- l'écriture d'une valeur de référence commune dans les paquets de flux de transport des flux de transport immédiatement après chaque point de commutation.

9. Procédé selon la revendication 7 ou 8, dans lequel la valeur de référence d'horloge commune est la plus basse valeur de référence d'horloge de n'importe quel flux de transport à ce point.

10. Procédé selon la revendication 7, 8 ou 9, comprenant en outre l'écriture de valeurs de référence d'horloge dans les paquets de flux de transport des flux de transport de telle sorte que la référence d'horloge augmente de façon monotone entre les points de commutation.

11. Procédé selon la revendication 10, dans lequel la référence d'horloge dans chaque flux de transport est décrite conformément à une fonction d'interpolation.

**12.** Procédé selon l'une quelconque des revendications précédentes dans lequel les flux de transport contiennent des composantes audio et vidéo et les flux de transport sont des codages des mêmes données multimédia source.

**13.** Procédé selon la revendication 12 dans lequel chaque flux de transport est codé à un débit binaire différent, et facultativement les flux sont conçus pour être utilisés dans un système de délivrance à débit binaire adaptatif.

**14.** Appareil de traitement de deux ou plusieurs flux de transport, chaque flux de transport comprenant des paquets de flux de transport provenant de deux ou plusieurs composantes, dans lequel les flux de transport sont des codages de mêmes données multimédia source, les deux ou plusieurs composantes comprenant des composantes audio et vidéo, les composantes comprenant des trames de données multimédia divisées en paquets de flux de transport, comprenant :

- un moyen (10) de localisation de points de commutation aux mêmes positions dans chacun des flux de transport d'après des paquets de flux de transport convenablement repérés d'une première composante des deux ou plusieurs composantes de chaque flux de transport ;
- un moyen (10) de vérification dans chaque flux de transport que des paquets de flux de transport d'une deuxième composante des deux ou plusieurs composantes dont les charges utiles forment une trame de données multimédia sont situés ou non entre deux points de commutation adjacents ; et
- un moyen (12) d'agencement des paquets de flux de transport dans chacun des flux de transport de telle sorte que les paquets de flux de transport de la deuxième composante des deux ou plusieurs composantes dont les charges utiles forment ensemble une trame de données multimédia dans chaque flux de transport soient situés entre deux points de commutation adjacents dans chacun des flux de transport.

**15.** Appareil de traitement de deux ou plusieurs flux de transport, dans lequel les flux de transport sont des codages des mêmes données multimédia source, les deux ou plusieurs composantes comprenant des composantes audio et vidéo, chaque flux de transport comprenant des paquets de flux de transport, les paquets de flux de transports ayant une valeur de référence d'horloge, comprenant :

- un moyen (10) de localisation de points de commutation aux mêmes positions dans chacun des flux de transport d'après des paquets de flux de transport convenablement repérés dans chaque flux de transport ;
- un moyen (10) de comparaison de la valeur de référence d'horloge des flux de transport immédiatement après chaque point de commutation ; et
- un moyen (14) d'écriture d'une valeur de référence commune dans les paquets de flux de transport des flux de transport immédiatement après chaque point de commutation.

Media is placed on
webserver for delivery to
viewers

Web server

Inter?

Set top box

**Figure 1**

TS Header
contains PID (to
identify which
data stream it
forms) and
optionally
Programme
Clock Reference
(PCR).

**Figure 2**

**Figure 3**

**Figure 4**

**Figure 5**

IDR Frame

IDR Frame

IDR Frame

IDR Frame

Time

**Figure 6**

In this stream, the last audio packet before the switch point is the end of an audio PES packet.

Switch point is the TS packet which contains the start of a video IDR.

| V4 | A2 | V5 | A3 | | V1 | V2 | V3 | A1 | V4 |

All of these video packets are the beginning of a sequence of packets which has the same start time.

This audio PES packet spans the switch point. If the stream is switched, the entire PES packet would have to be discarded.

Start of broken audio PES packet.

End of broken audio PES packet.

| A1 | V4 | V5 | V6 | | V1 | V2 | A2 | V3 | A3 |

Last audio packet before switch is not the end of the PES packet

End of the PES packet broken by the switch point.

Start of next audio PES packet.

| V5 | A2 | V6 | V7 | | V1 | V2 | A3 | V3 | A1 |

Last audio packet before switch is not the end of the PES packet

End of the PES packet broken by the switch point.

Start of next audio PES packet.

| A2 | V6 | V7 | V8 | | V1 | A3 | V2 | V3 | A1 |

Time

**Figure 7**

**Figure 8**

EP 2 524 502 B1

Figure 9

16

Source media encoded into
a transport stream
for each bitrate required.

⇩

Analysis determines switch
points, required
audio alignment and PCR
alignment

⇩

New files written with audio
aligned and PCR values
interpolated between switch
points.

⇩

Index of switch point locations
and timing information created to
indicate to client where to switch
between streams.

⇩

Optionally the output files may be
split into one file per chunk if this
makes distribution easier.

⇩

Finished files placed on a
webserver for the client to
access.

**Figure 10**

**Figure 11**

Switch point is the TS packet which contains the start of a video IDR.

Figure 12

Switch point is the TS packet which contains the start of a video IDR.

Switch point has to be moved back to make space for the extra audio packets.

These audio packets have been moved forwards.

Figure 13

**Figure 14**

PCR values marked $P_x$ are the switch point PCR value, which is the lowest of PCR values immediately after the switch point.
Values marked i are found by linear interpolation from the nearest $P_x$ values.
Values marked e only have a $P_x$ value on one side of them, and so are determined by extrapolation from the previous or next two $P_x$ values.

**Figure 15**

**Figure 16**